# EUROPEAN PATENT APPLICATION

(11) **EP 4 285 706 A1**
(43) Date of publication of application: **06.12.2023**
(21) Application number: 22176689.2
(22) Date of filing: 01.06.2022
(51) Int. Cl.: A01D 57/03

(54) **REEL TORQUE MEASUREMENTS IN AGRICULTURAL HEADER**

(71) Applicant: CNH Industrial Belgium N.V., 8210 Zedelgem (BE)
(72) Inventor: Jongmans, Dré W.J., 4791 AG Klundert (NL); Deruyter, Lucas, 8830 Gits (BE); Van Overschelde, Pieter, 8200 Sint-Andries (BE); Vandergucht, Yvan, 8647 Lo-Reninge (BE); Lenaerts, Bart, 3001 Heverlee (BE); Missotten, Bart M.A., 3020 Herent (BE); Yde, Luc, 9982 Sint-Jan-in-Eremo (BE)
(74) Representative: CNH Industrial IP Department

(57) **Abstract**

A header (18) for an agricultural harvester (10) comprises a header frame and a reel (36). The reel (36) is rotatably mounted to the header frame and comprises a reel frame with a plurality of tine bars (120) rotatably mounted thereto. At least one, but preferably two or more, of the tine bars (120) are coupled to respective torque sensors (200) for measuring a torque on the respective tine bars (120).

## Description

### TECHNICAL FIELD

The present invention relates to a header for an agricultural harvester, the header comprising a header frame and a reel. The reel is rotatably mounted to the header frame and comprises a reel frame with a plurality of tine bars rotatably mounted thereto. The present invention further relates to an agricultural harvester, for example a combine harvester comprising such a header.

### BACKGROUND

Many agricultural harvesters, including forage harvesters and combine harvesters use a header, sometimes called pick-up unit, that takes a crop from a field and moves it into a crop inlet of the harvester. In some types of crops, such as grain, it may be advantageous to use a header with a rotating reel. The reel typically spans the full width of the header and comprises a plurality of tine bars with tines attached thereto. During the harvesting of the crop, the reel rotates to let the tines make a comb-like movement through the crop. The rotation of the reel serves to lift fallen crop and to ensure that the crop is in a generally upright position when it is cut and gathered by the header.

Ideally, the reel height relative to the header frame is such that the reel only moves through the top of the crop field. When the reel height is too low, more energy will be needed for rotating the reel and excessive contact of the tines with the crop may lead to unnecessary grain loss. When the reel height is too high, the reel will just hang above the crop and cannot perform its function. In most harvesters, the operator is able to observe any variations in crop height that may occur while harvesting and has the possibility to adapt the reel height accordingly.

In European patent application EP 1 510 123 A1, a combine harvester is described having a header with a hydraulically driven rotatable reel. A pressure sensor in the hydraulic drive system is used for obtaining information about the load on the rotating reel. A control system is arranged to adjust the reel height based on the measured hydraulic pressure. This control system makes it possible to properly adjust the reel height when the operator's view is hindered, for example by an excess of dust. Additionally, it takes over some of the operator's responsibilities, thereby freeing up part of his attention for other important control tasks.

However, further improvements may still be desired for allowing a better adaptation of the operation of the reel to the continuously varying circumstances during harvesting.

### SUMMARY OF THE INVENTION

According to an aspect of the invention there is provided a header for an agricultural harvester, the header comprising a header frame and a reel. The reel is rotatably mounted to the header frame and comprises a reel frame with a plurality of tine bars rotatably mounted thereto. At least one, but preferably two or more, of the tine bars are coupled to respective torque sensors for measuring a torque on the respective tine bars.

By measuring the torque on one or more individual tine bars, it is made possible to not just monitor the overall load experienced by the rotating reel, but also the variation in load on the tine bars at different stages of the rotation of the reel. From the data thus obtained, it can for example be determined at what point the tine bar enters and leaves the crop field. This provides a way to estimate the crop height in an additional way and independent of the crop density.

In most grain headers, the reel frame comprises a reel shaft, rotatably mounted to the header frame, and two end plates mounted to opposite longitudinal ends of the reel shaft, the tine bars being rotatably mounted to the two end plates. The torque sensors may be mounted between the respective tine bars and one or both end plates. On wider headers, the reel may comprise additional support plates for coupling the tine bars to the reel shaft at one or more positions between the two end plates. The torque sensors may be mounted between the respective tine bars and such an additional support plate.

Additional torque sensors may be provided at multiple locations along the width of the reel by mounting the sensors between the tine bars and the additional support plates, either instead of or in addition to torque sensors mounted between the tine bars and the end plates. When torque sensors are provided at different locations along the width of the reel, it is possible to observe differences in interaction between the reel and the crop at these different locations. When, for example, crop has fallen flat in front of only a portion of the header, or when the crop height varies along the width of the header, this will be reflected in the sensor readings and the reel, the header, or the combine harvester may adjust its operations accordingly.

Often, a parallel auxiliary plate is provided at one end of the reel and located at a small offset from the end plate at that side. Short tine bar arms connect the tine bars to the auxiliary plate. The geometry of the short tine bar arms ensures that the tines maintain their orientation while the reel rotates. Usually, the tines are configured to point down. A tine adjustment mechanism may be provided for adjusting the orientation of the tines by rotating the auxiliary plate relative to the parallel end plate. When such an auxiliary plate is provided, the respective torque sensor may be mounted at a connection between the tine bar and its respective tine bar arm or at a connection between the respective tine bar arm and the auxiliary plate.

The torque sensors may operate wireless, wired, or use a combination of both. When wired connections are used, the torque sensors may be electronically connected to a power source or header control unit via electronic wiring that at least partly runs through or along the reel shaft. Such an arrangement provides a convenient way for wiring the rotating torque sensors, without the wires being entangled in the rotating reel. A wireless sensor may comprise a battery that is charged when the harvester is not active. Alternatively, the battery may be charged inductively while the reel is rotating. Wireless communication with a control unit provided on the header or on the harvester may take place using known and standard technology for wireless transmission of data.

According to a further aspect of the invention, an agricultural harvester, e.g., a combine harvester, is provided comprising a header as described above. The agricultural harvester may further comprise a controller configured to receive a torque signal from the respective torque sensor and to control the header in dependence of the received torque signal. Exemplary operational settings that may be controlled in dependence of the torque signal are a height of the header relative to a ground surface under the header, a position of the reel relative to the header frame, and a rotational speed of the reel.

### BRIEF DESCRIPTION OF THE DRAWINGS

Embodiments of the invention will now be described by way of example with reference to the accompanying drawings, in which:
Figure 1 shows a combine harvester with a header that may make use of the current invention.
Figure 2 shows a side view of part of the reel 36 of a header according to the invention.
Figure 3 shows a close-up of a portion of the side view of Figure 2.

### DETAILED DESCRIPTION

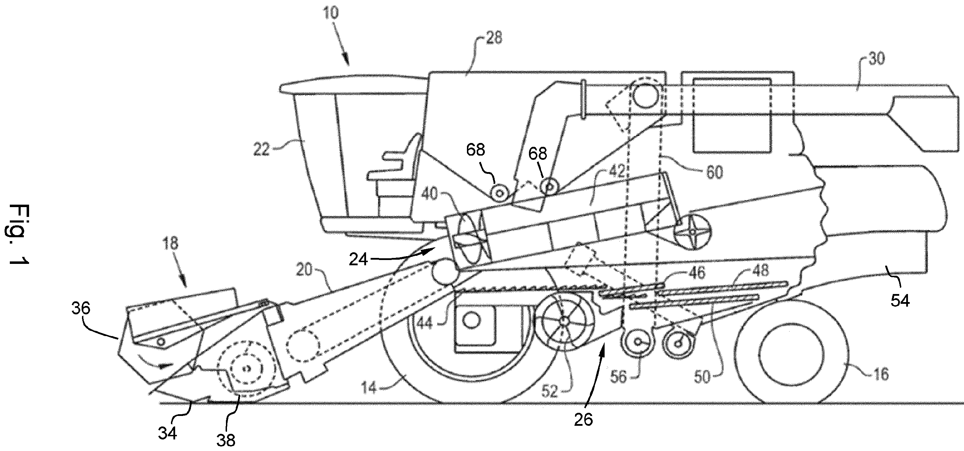

Figure 1 shows an agricultural harvester in the form of a combine harvester 10, which generally includes front and rear round engaging wheels 14, 16, a header 18, a feeder 20, an operator cabin 22, a threshing and separating system 24, a cleaning system 26, a grain tank 28 and an unloading tube 30. It should be appreciated that while the agricultural harvester is shown as a combine harvester 10, the agricultural harvester according to the present invention may be embodied by any construction that allows for crop material to be harvested, such as a conventional combine (which does not have a rotor), rotary combine, hybrid combine, chopper harvester, etc.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separating system 24.

The threshing and separating system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10. Grain and smaller elements of MOG (small MOG henceforth), such as chaff, dust and straw are small enough to pass through the perforations in the threshing concave 42 and are then discharged from the threshing and separating system 24.

Grain and small MOG that has successfully passed the threshing and separating system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

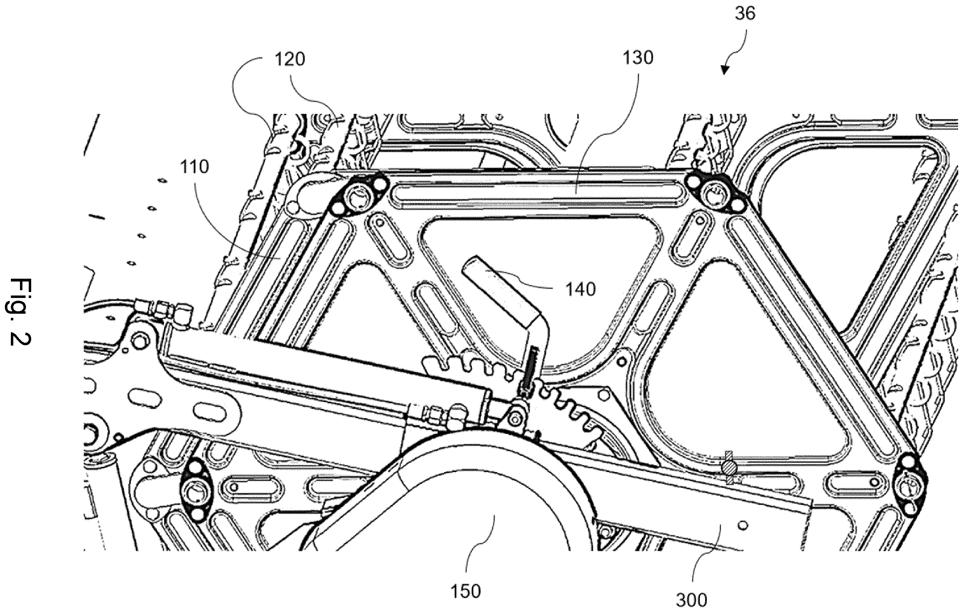

Figure 2 shows a side view of part of the reel 36 of a header 18 according to the invention. In this view, a reel end plate 110 with tine bars 120 attached thereto can be seen. At the other end of the tine bars 120, not shown in this figure, a second end plate is attached. Tines are mounted along the width of the tine bars and configured to comb through the crop during harvesting, when the reel 36 rotates. The rotating motion of the reel 36 and the tines through the crop helps to bring the crop in an upright position that makes it easier to efficiently cut and take in the crops while preventing unnecessary loss of grain kernels. The reel 36 is mounted to the header frame via an adjustable arm 300. Through pivoting, extension, and retraction of this arm 300 the position of the reel 36, relative to the header frame and the cutter bar 34 is adjusted to ensure optimal operation of the reel 36.

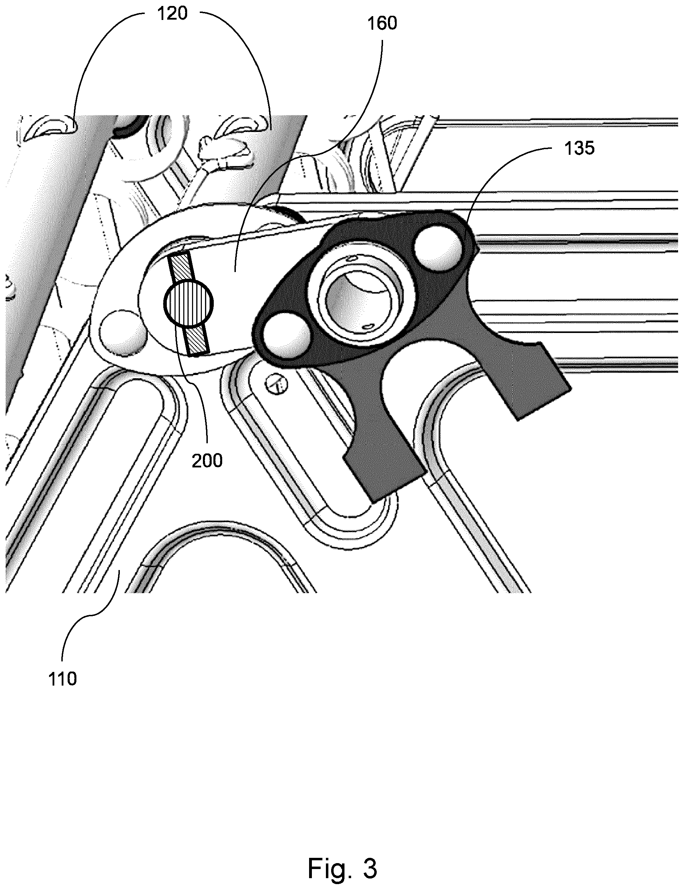

The reel may, for example, be driven electrically or hydraulically by a drive system 150 that rotates a reel shaft (not shown) to which the end plates 110 are attached. The reel 36 shown in these figures further comprises an auxiliary plate 130, provided in parallel with one of the end plates 110 and with a small offset therefrom. The end plates 110 and the auxiliary plate 130 may alternatively be provided as, e.g., hexagonal or circular frames. Visible in Figure 2, but better shown in Figure 3, which shows a close-up of a portion of the side view of Figure 2, are short tine bar arms 160 that connect the tine bars 120 to the auxiliary plate 130. In Figure 3, in order to provide a better view on the reel end plate 110, the auxiliary plate 130 itself is not shown. Figure 3 does show an auxiliary plate bracket 135 which rotatably connects the tine bar arm 160 to the auxiliary plate 130. The geometry of the tine bar arms 160 ensures that the tines maintain their orientation while the reel 36 rotates. Usually, the tines are configured to point down. A tine adjustment mechanism 140 (see Figure 2) may be provided for adjusting the orientation of the tines by rotating the auxiliary plate 130 relative to the parallel end plate 110.

In the reel 36 of the header 18 shown in the figures, the end plate 110 and auxiliary plate 130 are both generally hexagonal plates of sheet metal. It is, however, noted that in other embodiments, these plates 110, 130 may have alternative shapes and that the number of tine bars 120 in the reel 36 may be lower or higher than six. Instead of an actual plate 110, 130, alternative constructions may be used such as a wheel-like structure of a rim supported by spokes, or a star-like structure comprising only the spokes. Such alternative structures are mechanically and functionally fully equivalent to the plates 110, 130 that are commonly used for building a reel 36.

According to the invention, at least one, but preferably two or more, of the tine bars 120 are coupled to respective torque sensors 200 for measuring a torque on the respective tine bars 120. In the embodiment shown in Figures 2 and 3, the torque 200 sensor is mounted between the tine bar 120 and the tine bar arm 160. Each tine bar 120 may be coupled to one or more torque sensors 200. The torque sensors 200 may comprise strain gauges, coupled to electronic circuits that process the sensor signals and/or pass them on to remote control units on the header 18 or combine harvester 10.

By measuring the torque on one or more individual tine bars 120, it is made possible to not just monitor the overall load experienced by the rotating reel 36, but also the variation in load on the tine bars 120 at different stages of the rotation of the reel 36. From the data thus obtained, it can for example be determined at what point the tine bar 120 enters and leaves the crop field. This provides a way to estimate the crop height in an additional way and independent of the crop density.

The torque sensors 200 may operate wireless, wired, or use a combination of both. When wired connections are used, the torque sensors 200 may be electronically connected to a power source or header control unit via electronic wiring that at least partly runs through or along the reel shaft. Such an arrangement provides a convenient way for keeping the rotating torque sensors 160 in electric contact with stationary electronics on the header 18, without the wires being entangled in the rotating reel 36. A wireless torque sensor 200 may comprise a battery that is charged when the harvester 10 is not active. Alternatively, the battery may be charged inductively while the reel 36 is rotating or a generator may be mounted on and driven by the rotation of the reel shaft. Wireless communication with a control unit provided on the header 18 or on the harvester 10 may take place using known and standard technology for wireless transmission of data.

While the torque sensor 200 shown in Figures 2 and 3 is mounted between the tine bar 120 and its tine bar arm 160, this is just one example of a plurality of suitable mounting locations. Alternatively, the torque sensors 200 may, for example, be mounted between the tine bars 120 and an end plate 110. On wider headers 18, the reel 36 may comprise additional support plates for coupling the tine bars 120 to the reel shaft at one or more positions between the two end plates 110. The torque sensors 200 may then be mounted between the tine bars 120 and such an additional support plate. Other suitable mounting locations for the torque sensor 200 may be between a tine bar arm 160 and the auxiliary plate 130 or between the tine bar arm 160 and the auxiliary plate mounting bracket 135.

For an even more direct measurement of the torque applied to the tine bars by contact with the ground or crop, torque sensors 200 may be mounted between the tine bar 120 and the individual tines. When sensors 200 are applied to multiple (or all) tines, it will further be possible to detect broken or damaged tines. When the reel 36 comes too close to the header auger 38, the sensors 200 may be able to detect contact between the tines and the auger fingers or auger flights too. The use of multiple torque sensors 200 may further serve to improve the accuracy of the torque measurement and ensures that accurate measurements remain possible when some of the torque sensors 200 are damaged or broken, or stop working for other reasons.

Additional torque sensors 200 may be provided at multiple locations along the width of the reel 36, for example, by mounting the sensors 200 between the tine bars 120 and the support plates, optionally in addition to torque sensors mounted in the vicinity of the end plates 110. When torque sensors 200 are provided at different locations along the width of the reel 36, it is possible to observe differences in interaction between the reel 36 and the crop at these different locations. When, for example, crop has fallen flat in front of only a portion of the header 18, or when the crop height or density varies along the width of the header 18, this will be reflected in the sensor readings and the reel 36, the header 18, or the combine harvester 10 may adjust its operations accordingly.

While this invention has been described with respect to at least one embodiment, the present invention can be further modified within the scope of this description and the appended claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A header (18) for an agricultural harvester (10), the header (18) comprising a header frame and a reel (36), the reel (36) being rotatably mounted to the header frame and comprising a reel frame with a plurality of tine bars (120) rotatably mounted thereto, wherein at least one of the tine bars (120) is coupled to a respective torque sensor (200) for measuring a torque on the respective tine bar (120).

2. A header (18) as claimed in claim 1, wherein at least two of the tine bars (120) are coupled to respective torque sensors (200) for measuring a torque on the respective tine bars (120).

3. A header (18) as claimed in claim 2, wherein all the tine bars (120) are coupled to respective torque sensors (200) for measuring a torque on the respective tine bars (120).

4. A header (18) as claimed in any of the preceding claims, wherein the respective tine bar (120) is coupled to at least two torque sensors (200) at different locations along a width of the reel (36).

5. A header (18) as claimed in any of the preceding claims, wherein the reel frame comprises a reel shaft, rotatably mounted to the header frame, and two end plates (110) mounted to opposite longitudinal ends of the reel shaft, the tine bars (120) being rotatably mounted to the two end plates (110).

6. A header (18) as claimed in claim 5, wherein the respective torque sensor (200) is mounted between the respective tine bar (120) and one of the end plates (110).

7. A header (18) as claimed in claim 5 or 6, wherein the reel frame further comprises a support plate for coupling the tine bars (120) to the reel shaft at a position between the two end plates (110), and wherein the respective torque sensor (200) is mounted between the respective tine bar (120) and the support plate.

8. A header (18) as claimed in any of claims 5 to 7, wherein the reel (36) further comprises an auxiliary plate (130), provided in parallel with and located at an offset from one of the end plates (110), the tine bars (120) being connected to the auxiliary plate (130) by respective tine bar arms (160).

9. A header (18) as claimed in claim 8, wherein the respective torque sensor (200) is mounted at a connection between the tine bar (120) and its respective tine bar arm (160).

10. A header (18) as claimed in claim 8, wherein the respective torque sensor (200) is mounted at a connection between the respective tine bar arm (160) and the auxiliary plate (110).

11. A header (18) as claimed in any of claims 4 to 8, wherein the torque sensor (200) is electronically connected to a power source or header control unit via electronic wiring that at least partly runs through or along the reel shaft.

12. A header (18) as claimed in any of the preceding claims, wherein the torque sensor (200) is configured for wireless charging and/or for wireless communication.

13. An agricultural harvester (10) comprising a header (18) as claimed in any of the preceding claims.

14. An agricultural harvester (10) as claimed in claim 13, further comprising a controller configured to receive a torque signal from the respective torque sensor (200) and to control the header (18) in dependence of the received torque signal.

15. An agricultural harvester (10) as claimed in claim 14, wherein the control of the header (18) comprises at least one of:
adapting a height of the header (18) relative to a ground surface under the header (18),
adapting a position of the reel (36) relative to the header frame, and
adapting a rotational speed of the reel (36).
